# DEMANDE DE BREVET EUROPEEN

(11) **EP 0 737 829 A2**
(43) Date de publication de la demande: **16.10.1996**
(21) Numéro de dépôt: 96400535.9
(22) Date de dépôt: 15.03.1996
(51) Int. Cl.: F16J 15/02, B60J 10/06

(54) **Joint d'étanchéité ainsi que son procédé de fabrication**

(30) Priorité: 17.03.1995 FR 9503113
(71) Demandeur: STANDARD PRODUCTS INDUSTRIEL, F-95871 Bezons (FR)
(72) Inventeur: Piednoel, René M., 78800 Houilles (FR); Phan, Xuan Mai, 95130 Franconville (FR)
(74) Mandataire: Busnel, Jean-Benoît

(57) **Abrégé**

L'invention concerne un joint d'étanchéité comportant un ou plusieurs tronçons indépendants (11, 12, 13, 14, 15) de profilés extrudés (1) ; chacun desdits tronçons étant constitué d'une partie interne (11b-15b) et d'une partie externe (11a-15a), pourvues d'une armature interne (2, 2a, 2b)et d'au moins une face apparente.

Selon l'invention, ladite face apparente est formée au moins partiellement d'un élément rapporté (3) surmoulé sur la partie externe (11a-15a) et/ou la parte interne (11b-15b) et assurant à la fois la finition du joint et la liaison longitudinale entre lesdits tronçons (11-15).

## Description

La présente invention concerne un joint d'étanchéité ainsi que son procédé de fabrication.

Il existe déjà des joints d'étanchéité constitués d'une ou plusieurs parties armées, extrudées à partir d'une matière première élastomère et comportant au moins une face apparente.

Cependant, les armatures utilisées sont pourvues de zones ajourées réalisées par découpes ou fentages, qui entraînent des défauts d'enrobage.

En particulier, après extrusion il apparaît des irrégularités de surface au droit des zones ajourées, ce qui compromet l'aspect esthétique des faces apparentes du joint.

La présente invention a pour but de résoudre ces problèmes techniques de manière satisfaisante.

Ce but est atteint selon l'invention, au moyen d'un joint d'étanchéité comportant un ou plusieurs tronçons de profilés extrudés indépendants ; chacun desdits tronçons étant constitué d'une partie interne et d'une partie externe, pourvues d'une armature interne et d'au moins une face apparente, caractérisé en ce que ladite face apparente est formée au moins partiellement d'un élément rapporté, surmoulé sur la partie externe et/ou la partie interne et assurant à la fois la finition du joint et la liaison longitudinale entre lesdits tronçons.

Selon une caractéristique avantageuse, ledit élément rapporté comporte des reliefs.

Selon une première variante, ledit élément rapporté est inséré dans un logement longitudinal à bords affleurants.

Selon une autre variante, ledit élément rapporté est constitué au moins partiellement d'un revêtement pigmenté dont l'épaisseur est comprise entre 0,1 et 2 mm.

Selon une autre caractéristique, ledit élément rapporté est au moins partiellement en contact avec l'armature interne.

Selon encore une autre variante, ledit élément rapporté assure aussi la liaison transversale entre les tronçons au niveau des coudes de jonction

Un autre objet de l'invention est un procédé de fabrication d'un joint d'étanchéité comprenant l'extrusion d'une matière première pour former un ou plusieurs tronçons indépendants de profilés chacun desdits tronçons étant constitué d'une partie interne et d'une partie externe pourvues d'une armature interne et d'au moins une face destinée à être apparente, caractérisé en ce qu'on dispose les profilés extrudés dans un moule et on injecte une matière adhérente avec la matière première de façon à réaliser un élément rapporté surmoulé assurant à la fois la finition du joint et la liaison longitudinale entre lesdits tronçons.

Selon une caractéristique avantageuse du procédé, on réalise ledit élément rapporté sous forme d'un revêtement pigmenté de la face apparente dont l'épaisseur est comprise entre 0,1 et 2 mm.

Selon une première variante, on réalise ledit élément rapporté de façon à ce qu'il affleure les bords des profilés.

Selon une autre caractéristique, on réalise ledit élément rapporté sur toute la longueur du joint.

Selon une autre variante, on réalise dès l'extrusion des profilés, un logement destiné à recevoir ultérieurement par injection ledit élément rapporté surmoulé.

Selon encore une autre caractéristique, on réalise les coudes de jonction de l'élément rapporté en deux étapes successives d'injection ; une première étape destinée à former les parties interne et externe assurant la liaison transversale entre lesdits tronçons et une seconde étape destinée à obtenir la finition de la partie externe.

La présente invention permet de masquer les défauts d'aspect de la face apparente dans les zones ajourées de l'armature.

En outre, elle permet de supprimer les lignes de raccordement ainsi que les différences de teintes entre les divers tronçons du joint.

De plus, elle offre la possibilité de présenter au moins une face apparente décorative avec des surfaces pigmentées ou des filets en reliefs colorés dans la masse.

Afin d'assurer une parfaite adhérence de l'élément rapporté sur le joint, la matière injectée doit être compatible avec la matière première élastomère ou plastomère extrudée.

Par ailleurs, le moule est conçu pour ne recevoir que les zones à surmouler et permet ainsi de préserver les autres surfaces apparentes qui ne sont destinées à rester telles qu'extrudées.

Le joint de l'invention trouve son application dans l'automobile, le bâtiment, l'électroménager.. .

L'invention sera mieux comprise à la lecture de la description qui va suivre, accompagnée des dessins sur lesquels :
- la figure la représente une vue latérale d'un joint d'étanchéité de portière arrière comportant plusieurs tronçons assemblés selon l'invention ;
- la figure 1b représente une vue latérale d'un joint d'étanchéité de portière avant, selon l'invention ;
- la figure 2 représente une vue en coupe transversale selon AA du joint de la figure 1a ;
- la figure 3 représente une vue en coupe transversale selon BB du joint de la figure 1a ; et,
- la figure 4 représente une vue en coupe transversale selon CC du joint de la figure 1b.

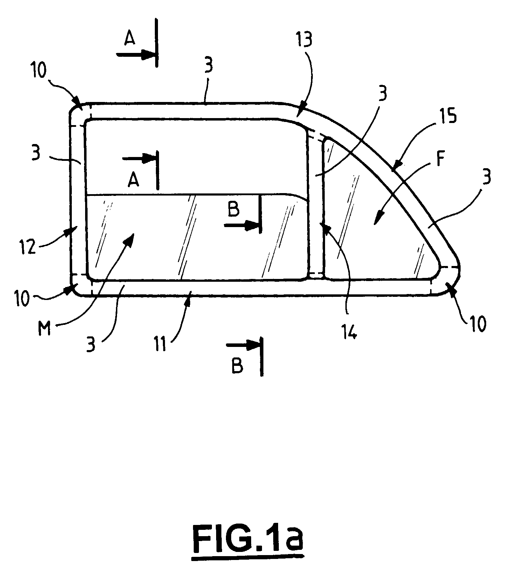

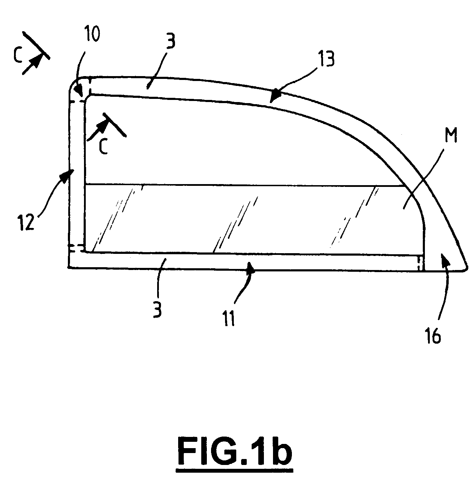

Le joint 1 représenté sur les figures 1a et 1b est destiné à être monté sur un cadre de portière (non représenté) respectivement arrière et avant de véhicule automobile pour assurer l'étanchéité d'une vitre mobile M et d'une vitre fixe F.

Il comprend plusieurs tronçons indépendants 11 à 15 de profilés extrudés à partir d'une matière première élastomère ou plastomère qui sont réunis et assemblés au moyen d'un élément rapporté 3 sur tout le pourtour du joint 1 selon le procédé de l'invention.

Le joint représenté sur la figure 1a comprend ainsi un tronçon 11 formant lécheur inférieur de vitre mobile M, un tronçon 12 formant une première coulisse latérale, un tronçon 13 formant coulisse supérieure, un tronçon 14 formant à la fois une seconde coulisse latérale et un montant, des coudes 10 de jonction et un tronçon 15 formant une garniture périphérique de vitre fixe F.

Sur la figure 1b, le joint comprend un tronçon 11 de lécheur inférieur de vitre mobile M, un tronçon 13 de coulisse supérieure, un tronçon 12 de coulisse latérale, des coudes 10 de jonction et une platine 16 de fixation d'un rétroviseur (non représenté).

Chaque tronçon 11 à 15 est constitué d'une partie interne 11b-15b généralement destinée à la fixation sur le cadre et d'une partie externe 11a-15a pourvue d'une armature (non visible sur les figures 1a et 1b). La partie externe 11a-15a comporte au moins une face destinée à être apparente et sur laquelle est surmoulé l'élément rapporté 3. L'élément rapporté 3 assure à la fois la finition du joint et la liaison longitudinale entre ses divers tronçons. Le surmoulage est effectué dans un moule en injectant une matière adhérente à la matière première des profilés extrudés.

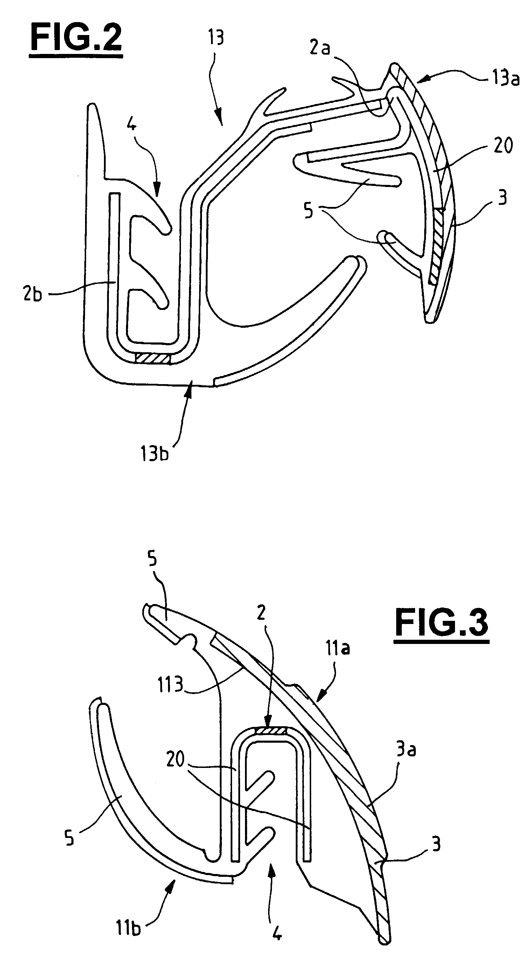

La figure 2 représente une vue en coupe transversale selon AA du tronçon 13 de coulisse supérieure. La section du tronçon 13 est constituée d'une partie interne 13b et d'une partie externe 13a.

La partie interne 13b est destinée à assurer la fixation sur le cadre de portière au moyen d'une pince 4 et comporte une armature 2b noyée dans la partie interne 13b.

La partie externe 13a est pourvue d'une armature 2a qui est ici distincte de l'armature 2b. La partie externe 13a comprend des organes 5 éventuellement mobiles assurant l'étanchéité du bord supérieur et de la face extérieure de la vitre M.

La partie externe 13a comporte, en outre, au moins une face destinée à être apparente. Cette face se trouve du côté extérieur à l'habitacle du véhicule et est formée, au moins partiellement de l'élément rapporté 3, surmoulé directement sur la partie externe 13a. L'élément rapporté 3 assure la finition du joint en masquant notamment les irrégularités d'aspect apparaissant à l'extrusion au niveau des zones ajourées 20 de l'armature 2a.

L'élément rapporté 3 assure aussi la liaison longitudinale entre le tronçon 13 et les tronçons adjacents 12, 14, 15.

L'élément rapporté 3 est ici réalisé sous forme d'un revêtement surmoulé au contact de l'armature 2a qui est éventuellement pigmenté ou teinté et dont l'épaisseur est comprise entre 0,1 et 2 mm.

Bien entendu, dans un mode de réalisation non représenté, il est possible de prévoir que la partie interne 13b comporte une face apparente exposée par exemple du côté intérieur à l'habitacle. Cette face serait alors pourvue d'un autre élément rapporté, surmoulé.

La figure 3 représente une vue en coupe transversale selon BB du tronçon 11 de lécheur inférieur.

La section du tronçon 11 est constituée d'une seule pièce avec une partie interne 11b et une partie externe 11a.

La partie interne 11b comprend d'une part, une pince d'ancrage 4 sur le cadre, pourvue d'une armature 2 à zones ajourées 20 et, d'autre part, d'organes d'étanchéité 5.

La partie externe 11a est pourvue d'une face apparente formée, au moins partiellement, de l'élément rapporté 3 réalisé par surmoulage.

L'élément rapporté 3 comporte éventuellement des reliefs tels qu'un bossage 3a et est inséré dans un logement longitudinal 113 à bords affleurants, réalisé dès l'extrusion des profilés 1.

L'élément rapporté 3 assure la finition du tronçon 11 d'une part en masquant les irrégularités d'enrobage dues aux zones ajourées 20 de l'armature 2, et d'autre part, en présentant des reliefs 3a décoratifs.

Avantageusement, l'élément rapporté sera teinté en partie ou en totalité superficiellement ou dans la masse, pour donner un effet esthétique supplémentaire.

L'élément rapporté 3 assure aussi la liaison longitudinale entre le tronçon 11 et les tronçons 12, 14 et 15 adjacents et se trouve donc ainsi dans le prolongement de l'élément rapporté décrit en référence à la figure 2.

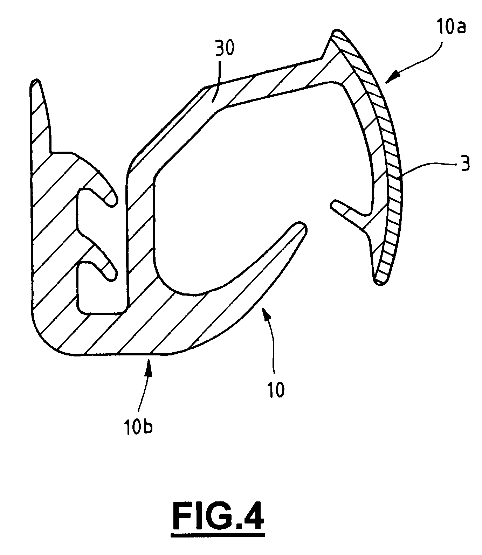

La figure 4 représente une vue en coupe selon CC du coude 10 de jonction entre les tronçons 12 et 13 du joint de la figure 1a ou 1b.

Le coude 10 comporte une partie interne 10b et une partie externe 10a dépourvues d'armature et dont les profils correspondent respectivement aux parties interne 12b,13b et externe 12a,13a, des tronçons 12 et 13 adjacents.

De cette façon, le coude 10 est un élément rapporté qui assure également la liaison transversale entre lesdits tronçons.

Les parties interne 10b et externe 10a des coudes de jonction 10 sont réalisées par une première étape d'injection de matière 30, surmoulée au niveau des seules zones libres situées entre les divers tronçons.

La matière 30 constitutive du coude 10 est de préférence identique ou tout au moins adhérente à la matière utilisée pour l'élément rapporté 3 qui est surmoulé par la suite sur la partie externe 10a lors d'une seconde étape d'injection.

La face apparente de l'élément rapporté 3 sur le coude 10 est dans le même plan que la face correspondante des éléments rapportés sur les tronçons 11-15.

## Revendications

1. Joint d'étanchéité comportant un ou plusieurs tronçons indépendants (11, 12, 13, 14, 15) de profilés extrudés (1) ; chacun desdits tronçons étant constitué d'une partie interne (11b-15b) et d'une partie externe (11a-15a), pourvues d'une armature interne (2, 2a, 2b)et d'au moins une face apparente, caractérisé en ce que ladite face apparente est formée au moins partiellement d'un élément rapporté (3) surmoulé sur la partie externe (11a-15a) et/ou la parte interne (11b-15b) et assurant à la fois la finition du joint et la liaison longitudinale entre lesdits tronçons (11-15).

2. Joint selon la revendication 1, caractérisé en ce que ledit élément rapporté (3) comporte des reliefs (3a).

3. Joint selon l'une des revendications 1 ou 2, caractérisé en ce que ledit élément rapporté (3) est inséré dans un logement longitudinal (113) à bords affleurants.

4. Joint selon l'une des revendications précédentes, caractérisé en ce que ledit élément rapporté (3) est constitué au moins partiellement d'un revêtement pigmenté dont l'épaisseur est comprise entre 0,1 et 2 mm.

5. Joint selon l'une des revendications précédentes, caractérisé en ce que ledit élément rapporté (3) est au moins partiellement en contact avec l'armature interne (2a).

6. Joint selon l'une des revendications précédentes, caractérisé en ce que ledit élément rapporté (3) assure aussi la liaison transversale entre les tronçons (11-15) au niveau des coudes (10) de jonction.

7. Procédé de fabrication d'un joint d'étanchéité comprenant l'extrusion d'une matière première pour former un profilé (1) en un ou plusieurs tronçons indépendants (11-15) de profilés (1) ; chacun desdits tronçons étant constitué d'une partie interne (11b-15b) et d'une partie externe (11a-15a) pourvues d'une armature interne (2, 2a, 2b) et d'au moins une face destinée à être apparente, caractérisé en ce qu'on dispose les profilés (1) extrudés dans un moule et on injecte une matière adhérente avec la matière première de façon à réaliser un élément rapporté (3) surmoulé assurant à la fois la finition du joint et la liaison longitudinale entre lesdits tronçons (11-15).

8. Procédé selon la revendication 7, caractérisé en ce qu'on réalise ledit élément rapporté (3) sous forme d'un revêtement pigmenté de la face apparente dont l'épaisseur est comprise entre 0,1 et 2 mm.

9. Procédé selon la revendication 7 ou 8, caractérisé en ce qu'on réalise ledit élément rapporté (3) de façon à ce qu'il affleure les bords des profilés (1).

10. Procédé selon l'une des revendications 7 à 9, caractérisé en ce qu'on réalise ledit élément rapporté (3) sur toute la longueur du joint.

11. Procédé selon l'une des revendications 7 à 10, caractérisé en ce qu'on réalise dès l'extrusion des profilés (1), un logement (113) destiné à recevoir ultérieurement par injection ledit élément rapporté surmoulé (3).

12. Procédé selon l'une des revendications 7 à 11, caractérisé en ce qu'on réalise les coudes (10) de jonction de l'élément rapporté (3) en deux étapes successives d'injection ; une première étape destinée à former les parties interne (10b) et externe (10a) assurant la liaison transversale entre lesdits tronçons (11-15) et une seconde étape destinée à obtenir la finition de la partie externe (10a).
